(19) Europäisches Patentamt / European Patent Office / Office européen des brevets

(11) **EP 3 697 030 B1**

(12) **FASCICULE DE BREVET EUROPEEN**

(45) Date de publication et mention de la délivrance du brevet:
**02.06.2021 Bulletin 2021/22**

(51) Int Cl.:
***H04L 12/40*** *(2006.01)*   ***H04L 12/46*** *(2006.01)*
***H04L 12/44*** *(2006.01)*   *H04L 12/26* *(2006.01)*

(21) Numéro de dépôt: **20157237.7**

(22) Date de dépôt: **13.02.2020**

(54) **DISPOSITIF ÉLECTRONIQUE ET PROCÉDÉ DE RÉCEPTION DE DONNÉES VIA UN RÉSEAU DE COMMUNICATION ASYNCHRONE, SYSTÈME DE COMMUNICATION ET PROGRAMME D'ORDINATEUR ASSOCIÉS**

ELEKTRONISCHE VORRICHTUNG UND VERFAHREN ZUM DATENEMPFANG ÜBER EIN ASYNCHRONES KOMMUNIKATIONSNETZ, ENTSPRECHENDES KOMMUNIKATIONSSYSTEM UND COMPUTERPROGRAMM

ELECTRONIC DEVICE AND METHOD FOR RECEIVING DATA VIA AN ASYNCHRONOUS COMMUNICATION NETWORK, RELATED COMMUNICATION SYSTEM AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.02.2019 FR 1901557**

(43) Date de publication de la demande:
**19.08.2020 Bulletin 2020/34**

(73) Titulaire: **Thales**
**92400 Courbevoie (FR)**

(72) Inventeurs:
• **MONNIER, Stéphane**
**33701 MERIGNAC (FR)**
• **CAPIRCIO, Patrice**
**33701 MERIGNAC (FR)**

(74) Mandataire: **Lavoix**
**2, place d'Estienne d'Orves**
**75441 Paris Cedex 09 (FR)**

(56) Documents cités:
FR-A1- 2 920 623   US-A1- 2015 103 734
US-A1- 2017 171 112   US-A1- 2018 337 938

**Description**

La présente invention concerne un dispositif électronique de réception de données via un réseau de communication asynchrone comportant au moins un réseau élémentaire, le dispositif électronique étant configuré pour être connecté audit réseau élémentaire.

L'invention concerne également un système électronique de communication de données comprenant un dispositif électronique d'émission et un tel dispositif électronique de réception, reliés entre eux par un réseau de communication asynchrone, le réseau de communication comportant au moins un réseau élémentaire.

L'invention concerne également un procédé de réception de données via un réseau de communication asynchrone comportant au moins un réseau élémentaire, le procédé étant mis en œuvre par un dispositif électronique de réception connecté audit réseau élémentaire.

L'invention concerne également un programme d'ordinateur comportant des instructions logicielles qui, lorsqu'elles sont exécutées par un ordinateur, mettent en œuvre un tel procédé de réception.

L'invention concerne le domaine des systèmes de communication avec réseau de communication asynchrone, par exemple réseau de communication Ethernet, en particulier des systèmes de communication avioniques embarqués à bord d'aéronef, tels que des systèmes de communication avioniques conformes à la partie 7 de la norme ARINC 664.

Les documents US 2015/0103734 A1, US 2017/0171112 A1 et FR 2 920 623 A1 concernent des réseaux de communication avionique.

Le document US 2018/0337938 A1 concerne un procédé de protection d'un réseau CAN contre des cyber-attaques.

On connait du document FR 2 864 393 B1 un réseau de communication asynchrone de type Ethernet full-duplex commuté, et un procédé de surveillance d'un tel réseau, notamment dans le domaine avionique.

Le réseau de communication comporte deux réseaux élémentaires indépendants comprenant chacun au moins un équipement source et au moins un équipement destinataire reliés entre eux par au moins un lien physique au travers d'au moins un commutateur. Chaque équipement est relié à chaque réseau élémentaire, et chaque trame émise par un équipement source sur un lien virtuel d'un réseau élémentaire indépendant comporte un numéro compris dans un intervalle prédéterminé.

En réception par un équipement destinataire d'une trame sur un lien virtuel à un instant donné, le procédé de surveillance comprend, pour la gestion d'une redondance entre réseaux élémentaires, la définition, pour ce lien virtuel, d'une fenêtre comprise dans ledit intervalle prédéterminé, correspondant à des trames déjà reçues à cet instant donné ; la comparaison du numéro de la trame reçue avec ladite fenêtre ; et la prise en compte de la trame reçue lorsque le numéro de trame n'est pas compris dans ladite fenêtre.

Cependant, un tel réseau de communication asynchrone et un tel procédé de surveillance ne sont pas très robustes en termes de cybersécurité et sont notamment sensibles à une éventuelle cyberattaque.

Le but de l'invention est alors de proposer un dispositif électronique et un procédé de réception de données via un réseau de communication asynchrone, qui permettent d'améliorer la surveillance du réseau, et notamment de détecter plus efficacement une cyberattaque.

A cet effet, l'invention a pour objet un dispositif électronique de réception selon la revendication 1.

Le dispositif électronique de réception selon l'invention permet alors de par l'estimation de la gigue (de l'anglais *jitter*) du réseau à partir de l'écart temporel minimal et des instants temporels de réception des trames, puis la comparaison de la gigue estimée à la plage autorisée de valeurs de gigue de réseau, d'améliorer la surveillance du réseau asynchrone. En effet, la surveillance de la gigue de réseau et la détection d'une valeur anormale de gigue permet de déceler plus facilement un remplacement d'un équipement connecté au réseau par un équipement malveillant, un remplacement d'un commutateur réseau (de l'anglais *switch*) par un commutateur malveillant, ainsi qu'une utilisation anormale du réseau résultant par exemple d'une cyberattaque.

Suivant d'autres aspects avantageux de l'invention, le dispositif électronique de réception est selon l'une quelconque des revendications 2 à 7.

Suivant un autre aspect avantageux de l'invention, le module de vérification est au moins partiellement réalisé sous forme d'un composant logique programmable, tel qu'un FPGA (de l'anglais *Field Programmable Gate Array*).

L'invention a également pour objet un système électronique de communication selon la revendication 8.

L'invention a également pour objet un procédé de réception de données selon la revendication 9.

L'invention a également pour objet un programme d'ordinateur selon la revendication 10.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

la figure 1 est une représentation schématique d'un aéronef équipé d'un système de communication selon l'invention, comprenant au moins deux équipements avioniques reliés entre eux par un réseau de communication asynchrone ;
la figure 2 est une vue schématique illustrant l'émission de trames selon une table d'émission prédéfinie sur un réseau élémentaire du réseau de communication asynchrone de la Figure 1 et avec un écart temporel minimal entre les instants temporels d'émission de deux trames successives ;

la figure 3 est une vue schématique illustrant la surveillance de la réception de trames, à partir des instants de réception et d'une gigue de réseau estimée ; et

la figure 4 est un organigramme d'un procédé de transmission de données au sein du système de communication de la figure 1.

Dans la suite de la description, l'expression « sensiblement égal à » définit une relation d'égalité à plus ou moins 10 %, de préférence à plus ou moins 5 %.

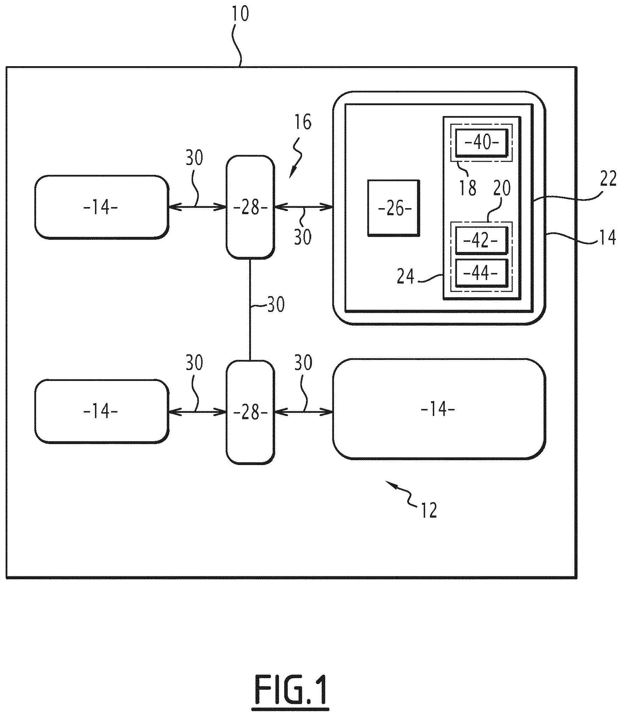

Sur la figure 1, un aéronef 10 comprend un système de communication 12 comportant au moins deux équipements électroniques 14 reliés entre eux par un réseau de communication asynchrone 16, tel qu'un réseau de communication Ethernet redondé.

L'aéronef 10 est de préférence un avion. En variante, l'aéronef 10 est un hélicoptère, ou encore un drone piloté à distance par un pilote.

Le système de communication 12 comporte plusieurs équipements électroniques 14, tels que des équipements avioniques comme dans l'exemple de la figure 1 où le système de communication 12 est embarqué à bord de l'aéronef 10.

Le système de communication 12 comprend un dispositif électronique d'émission 18 et un dispositif électronique de réception 20 reliés entre eux par le réseau de communication asynchrone 16.

Dans l'exemple de la figure 1, chaque équipement électronique 14 est de préférence configuré, d'une part, pour émettre des données à destination d'autre(s) équipement(s) électronique(s) 14, et d'autre part, pour recevoir des données de la part d'autre(s) équipement(s) électronique(s) 14. Chaque équipement électronique 14 comprend alors de préférence le dispositif d'émission 18 et le dispositif de réception 20.

L'homme du métier comprendra bien entendu qu'un équipement électronique 14 qui ne serait destiné qu'à émettre des données et pas à en recevoir, comportera alors le dispositif d'émission 18, mais pas le dispositif de réception. Inversement, un équipement électronique 14 qui ne serait destiné qu'à recevoir des données de la part d'autre(s) équipement(s) électronique(s) 14 comportera alors le dispositif de réception 20, mais pas le dispositif d'émission.

Chaque équipement électronique 14 est de préférence conforme à la partie 7 de la norme ARINC 664.

Dans l'exemple de la figure 1, chaque équipement électronique 14 comprend une unité de traitement d'informations 22 formée par exemple d'une mémoire 24 associée à un processeur 26.

Dans l'exemple de la figure 1, un seul équipement électronique 14 est représenté en détail avec les différents dispositifs et modules qu'il contient, par souci de simplification du dessin.

Le réseau de communication 16 comprend au moins un commutateur réseau 28 et au moins une liaison bidirectionnelle 30, chaque commutateur réseau 28 étant connecté à un ou plusieurs équipements électroniques 14 via des liaisons bidirectionnelles 30 respectives. Le réseau de communication 16 comprend de préférence plusieurs commutateurs réseau 28, comme dans l'exemple de la figure 1 où le réseau de communication 16 comprend deux commutateurs réseau 28 reliés entre eux par une liaison bidirectionnelle 30.

L'homme du métier comprendra que, lorsque le réseau de communication 16 est un réseau de communication Ethernet, par exemple de type Ethernet "full-duplex" (bidirectionnel simultané) commuté, chaque commutateur réseau 28 est un commutateur réseau Ethernet, par exemple de type Ethernet "full-duplex" commuté, et chaque liaison bidirectionnelle 30 est une liaison bidirectionnelle Ethernet, par exemple de type Ethernet "full-duplex" commuté.

Le réseau de communication 16 est de préférence conforme à la partie 7 de la norme ARINC 664, et chaque commutateur réseau 28 est alors également conforme à la partie 7 de la norme ARINC 664. Le réseau de communication 16 est, par exemple, un réseau AFDX (de l'anglais *Avionics Full DupleX switched ethernet*) avec un ou plusieurs commutateur(s) réseau(x) 28 conforme(s) à la partie 7 de la norme ARINC 664.

Le réseau de communication 16 de type Ethernet "full-duplex" commuté, tel que défini par exemple dans le document US 2003/0152077 A1, est basé sur le standard Ethernet full-duplex commuté décrit par la norme IEEE802.3, et offre des fonctionnalités améliorées par rapport à ce standard pour permettre une meilleure fiabilité dans la transmission des informations, notamment dans le domaine avionique.

Le réseau de communication 16 offre un temps de transmission déterministe de par l'ajout de services de communication sur le réseau Ethernet. Cet aspect déterministe utilise un concept de lien virtuel, qui est une représentation conceptuelle d'une liaison d'un équipement 14 source vers au moins un équipement 14 destinataire. Un tel concept de lien virtuel permet d'isoler les transferts de données entre un équipement 14 source et des équipements 14 destinataires. Un lien virtuel est vu comme un "tuyau" sur le réseau 16.

Comme décrit dans le document FR 2 864 393 B1, un lien virtuel est caractérisé par exemple par:

- un sens de transfert, le lien virtuel étant monodirectionnel,
- un équipement 14 source unique,
- un ou plusieurs équipements 14 destinataires,

- une bande passante (nombre maximum de paquets et leur taille maximale par seconde) figée,
- un temps maximum garanti de transfert des paquets d'un équipement 14 source vers un équipement 14 destinataire, quel que soit le comportement du reste du réseau 16, chaque lien virtuel ayant son propre temps de transfert,
- un chemin figé sur le réseau 16, et
- un identifiant unique.

Le commutateur 28 connaît, par une table de configuration statique, les liens virtuels qu'il doit commuter ainsi que le nombre de paquets autorisés pour un lien virtuel.

Ce concept de lien virtuel permet de figer les communications entre les équipements 14 en configurant les routes et les bandes passantes allouées aux liens virtuels. Ainsi, le flux formé par un lien virtuel est assuré de ne pas être perturbé par les autres flux partageant les mêmes liens physiques tout au long de sa route dans le réseau. De plus, ce concept de lien virtuel permet, par une gestion centralisée des flux, de s'assurer que la somme des bandes passantes allouées aux liens virtuels sur un même lien physique ne dépasse pas les capacités de la technologie de celui-ci.

Le réseau de communication asynchrone 16 comporte au moins un réseau élémentaire, correspondant par exemple à un lien virtuel respectif.

Le réseau de communication asynchrone 16 est de préférence un réseau de communication redondant et comporte au moins deux réseaux élémentaires indépendants, redondants l'un de l'autre. Dans ce cas, deux équipements électroniques 14, un équipement source et un équipement destinataire, communiquent par l'intermédiaire d'au moins deux réseaux élémentaires indépendants. De façon connue, la redondance est réalisée trame par trame sur chacun desdits réseaux.

A titre d'exemple, sur un lien virtuel, l'équipement source envoie successivement des trames 32 d'informations vers l'équipement destinataire. Chacune desdites trames 32 est envoyée, avec un champ de données identique, sur chacun des réseaux. En fonction de la charge et de la configuration desdits réseaux élémentaires, ces deux trames 32 peuvent arriver à l'équipement destinataire à des instants différents. On se place ici dans le cas où les deux réseaux élémentaires fonctionnent correctement et par conséquent les deux trames 32 émises arrivent à l'équipement 14 destinataire.

Une trame 32 de données, ou encore un paquet de données, est définie comme un ensemble de données envoyé en une seule fois sur le réseau de communication 16. Les données de chaque trame 32 ne sont pas interprétées. Le réseau de communication 16 les transporte sans connaître leur signification.

Chaque trame 32 comporte un identifiant de trame et un champ de données. L'identifiant de trame est inclus dans des données réseaux qui sont utilisées pour acheminer la trame 32 à bon port. Le champ de données correspond aux données utiles, qui sont la "charge utile" de la trame.

Chaque trame 32 comporte généralement une partie de données utiles et une partie d'en-tête et de fin de trame. L'identifiant de trame est alors inclus dans la partie d'en-tête et de fin de trame, et le champ de données correspond à la partie de données utiles.

Dans l'exemple de la partie 7 de la norme ARINC 664, l'identifiant de trame est formé d'un identifiant du lien virtuel correspondant, également noté VL_ID (de l'anglais *Virtual Link IDentifier*), et d'un numéro de séquence, également noté SN (de l'anglais *Sequence Number*). L'identifiant du lien virtuel correspondant, ou VL_ID, est inclus un champ d'adresse du destinataire (de l'anglais *Destination Address*), lui-même inclus dans la partie d'en-tête et de fin de trame. Le numéro de séquence est un compteur pour un lien virtuel donné, et s'incrémente à chaque émission d'une trame 32 ayant le même identifiant de lien virtuel (VL_ID), ce qui permet de distinguer deux trames 32 associées à un même lien virtuel. Le numéro de séquence, ou SN, est aussi inclus dans la partie d'entête et de fin de trame.

Chaque dispositif électronique d'émission 18 est configuré pour émettre, à destination du ou des dispositifs électroniques de réception 20, au moins une trame 32 de données sur chacun des réseaux élémentaires. Chaque dispositif d'émission 18 est configuré pour être connecté à chaque réseau élémentaire.

Dans l'exemple de la figure 1, chaque dispositif d'émission 18 comprend alors un module d'émission 40 configuré pour émettre, à destination du ou des dispositifs électroniques de réception 20, au moins une trame 32 de données sur un réseau élémentaire correspondant, de préférence sur chacun des réseaux élémentaires lorsque le réseau de communication 16 est redondant.

Chaque dispositif d'émission 18 est, par exemple, un dispositif avionique conforme à la partie 7 de la norme ARINC 664, et le module d'émission 40 est alors configuré pour émettre chaque trame 32 selon un protocole conforme à la partie 7 de la norme ARINC 664.

Chaque dispositif électronique de réception 20 est configuré pour recevoir des données, en particulier des trames 32 de données, via le réseau de communication asynchrone 16. Chaque dispositif de réception 20 est configuré pour être connecté à chaque réseau élémentaire.

Chaque dispositif de réception 20 comprend un module de réception 42 configuré pour recevoir via le réseau de communication 16 au moins une trame 32 de données, chaque trame 32 étant transmise sur ledit réseau élémentaire selon une table d'émission TAB prédéfinie et avec un écart temporel minimal BAG entre les instants temporels d'émission de deux trames 32 successives.

Selon l'invention, chaque dispositif de réception 20 comprend un module de vérification 44 configuré, pour au moins deux trames 32 de données reçues, pour estimer une gigue de réseau G à partir de l'écart temporel minimal BAG et des instants temporels de réception d'au moins deux trames 32 reçues sur ledit réseau élémentaire, puis pour comparer la gigue estimée G à une plage autorisée de valeurs de gigue de réseau.

Chaque dispositif de réception 20 est, par exemple, un dispositif avionique conforme à la partie 7 de la norme ARINC 664, et le module de réception 42 est alors configuré pour recevoir chaque trame 32 selon un protocole conforme à la partie 7 de la norme ARINC 664.

Chaque commutateur réseau 28 (de l'anglais *switch*) est connu en soi, et comporte différents ports de communication, également appelés ports de connexion, chaque port de communication étant apte à être connecté à un équipement électronique 14 correspondant.

Dans l'exemple de la figure 1, le module d'émission 40, le module de réception 42 et le module de vérification 44 sont réalisés chacun sous forme d'un logiciel, ou d'une brique logicielle, exécutables par le processeur 26. La mémoire 24 est alors apte à stocker un logiciel d'émission configuré pour émettre au moins une trame 32 de données sur le réseau élémentaire correspondant selon la table d'émission TAB prédéfinie à destination d'autre(s) dispositif(s) de réception 20. La mémoire 24 est également apte à stocker un logiciel de réception configuré pour recevoir via le réseau de communication 16 au moins une trame 32 de données transmise sur ledit réseau élémentaire, et un logiciel de vérification configuré, pour au moins deux trames 32 de données reçues, pour estimer la gigue de réseau G à partir de l'écart temporel minimal BAG et des instants temporels de réception d'au moins deux trames 32 reçues sur ledit réseau élémentaire, puis pour comparer la gigue estimée G à la plage autorisée de valeurs de gigue de réseau. Le processeur 26 de l'unité de traitement d'informations 22 est alors apte à exécuter le logiciel d'émission dans le cas du dispositif d'émission 18, ou bien à exécuter le logiciel de réception et le logiciel de vérification dans le cas du dispositif de réception 20.

En variante non représentée, le module d'émission 40, le module de réception 42 et le module de vérification 44 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

En variante encore, et selon un mode de réalisation préférentiel, le module d'émission 40 et le module de réception 42 sont réalisés chacun sous forme d'un logiciel, ou d'une brique logicielle, exécutables par le processeur 26 ; et le module de vérification 44 est réalisé sous forme d'un composant logique programmable, tel qu'un FPGA.

Lorsque le dispositif électronique de réception 20 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

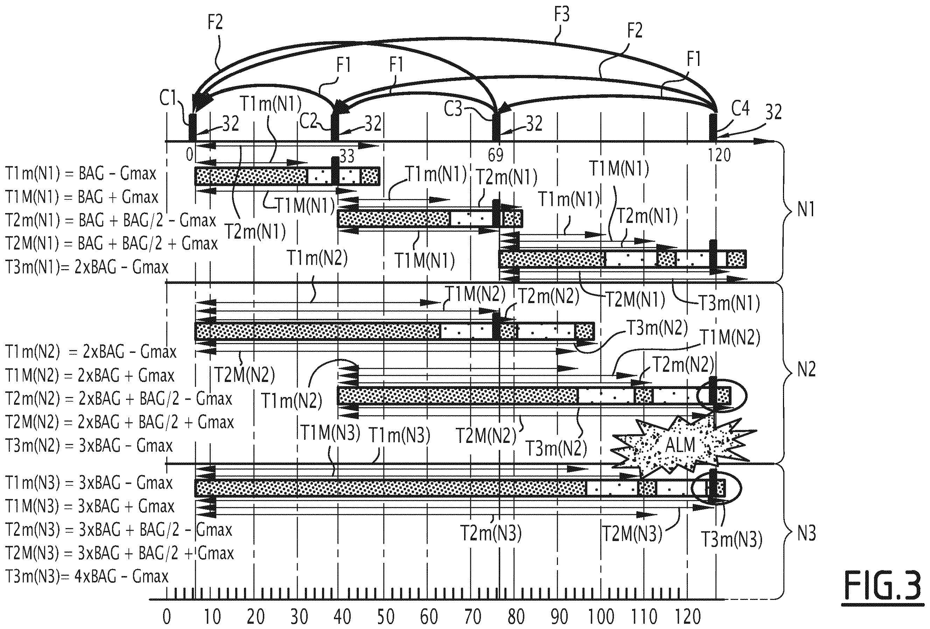

Le module d'émission 40 est configuré pour émettre chaque trame 32 de données sur le réseau élémentaire correspondant selon la table d'émission TAB prédéfinie et avec l'écart temporel minimal BAG entre les instants temporels d'émission de deux trames 32, émises successivement sur ledit réseau élémentaire, comme représenté sur la figure 3.

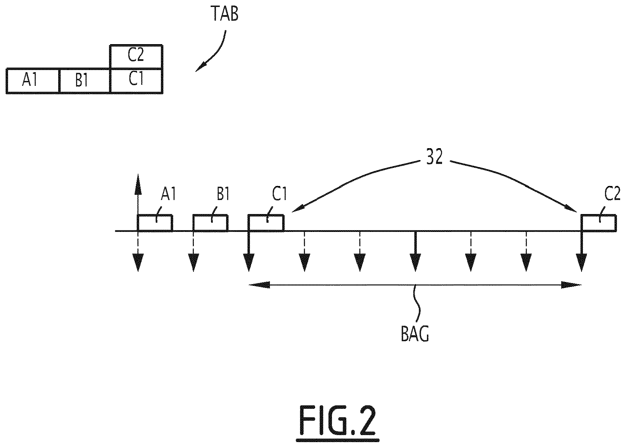

Dans l'exemple de la figure 2, chaque trame 32 associée à un premier lien virtuel A est noté Ak, où k est un indice entier s'incrémentant à partir de 1. De manière analogue, chaque trame 32 associée à un deuxième lien virtuel B est noté Bi, et chaque trame 32 associée à un troisième lien virtuel C est noté Ck. L'homme du métier comprendra alors que chacun des liens virtuels A, B, C forme un réseau élémentaire dudit réseau de communication asynchrone 16.

Dans cet exemple de la figure 2, la table d'émission TAB prédéfinie comporte une trame A1 pour le premier lien virtuel A, une trame B1 pour le deuxième lien virtuel B, et deux trames C1, C2 pour le troisième lien virtuel C, l'écart temporel minimal BAG étant alors représenté entre les instants temporels d'émission des deux trames C1, C2.

Le module de vérification 44 est apte à estimer la gigue de réseau G à partir de l'écart temporel minimal BAG et des instants temporels de réception d'au moins deux trames 32 reçues sur ledit réseau élémentaire, à comparer la gigue estimée G à la plage autorisée de valeurs de gigue de réseau. En complément facultatif, le module de vérification 44 est apte à générer une alerte en cas d'incohérence de la gigue estimée G, c'est-à-dire lorsque la valeur de la gigue de réseau estimée G n'est pas comprise dans la plage autorisée de valeurs de gigue de réseau.

Le module de vérification 44 est de préférence configuré pour estimer la gigue de réseau G à partir de la durée $\Delta T_R$ séparant deux instants temporels de réception et d'une période temporelle inter-trames $\Delta T_T$ prédéfinie, la période temporelle inter-trames $\Delta T_T$ prédéfinie étant fonction de l'écart temporel minimal BAG.

La période temporelle inter-trames $\Delta T_T$ prédéfinie est, par exemple, égale à l'écart temporel minimal BAG divisé par un facteur de sur-échantillonnage K.

Le module de vérification 44 est par exemple configuré pour estimer la gigue de réseau G selon l'équation

suivante :

[Math1]

$$G = \min\left\{\Delta T_R - E\left(\frac{\Delta T_R}{\Delta T_T}\right)\cdot \Delta T_T; \left(E\left(\frac{\Delta T_R}{\Delta T_T}\right) + 1\right)\cdot \Delta T_T - \Delta T_R\right\}$$

où G représente la gigue de réseau estimée ;

$\Delta T_R$ représente la durée séparant les instants temporels de réception de deux trames 32 reçues sur ledit réseau élémentaire par le module de réception 42 ;

E représente l'opérateur partie entière, retournant le plus grand entier inférieur ou égal au nombre considéré, i.e. E(z) est le plus grand entier inférieur ou égal à z ; et

$\Delta T_T$ représente la période temporelle inter-trames prédéfinie, $\Delta T_T$ vérifiant par exemple l'équation suivante :

[Math2]

$$\Delta T_T = \frac{BAG}{K}$$

où BAG représente l'écart temporel minimal entre les instants temporels d'émission de deux trames 32 successives ; et

K représente le facteur de sur-échantillonnage.

L'écart temporel minimal est également appelé BAG (de l'anglais *Bandwidth Allocation Gap*) et correspond alors à un écart d'allocation de bande passante.

Lorsque le réseau de communication 16 est conforme à la partie 7 de la norme ARINC 664, et comporte des liens virtuels, également noté VL (de l'anglais *Virtual Link*), cet écart temporel minimal BAG est une caractéristique importante du réseau de communication 16, et correspond à une vitesse maximale à laquelle les données peuvent être envoyées, en ce qu'il est alors garanti qu'elles le seront avec cet intervalle temporel minimal.

Autrement dit, dans le cas d'un réseau de communication 16 est conforme à la partie 7 de la norme ARINC 664, la bande passante allouée à un lien virtuel se caractérise par l'écart temporel minimal BAG, qui définit le temps minimal entre le début de l'émission de deux trames successives appartenant à un même lien virtuel. Après la traversée du réseau de communication 16, deux trames qui étaient séparées de cet écart temporel minimal BAG peuvent se retrouver accolées au niveau du dispositif de réception 20. Par ailleurs, la partie 7 de la norme ARINC 664 ne définit pas de valeur maximale de l'écart temporel séparant deux trames d'un même lien virtuel.

Pour un ensemble de trames 32 à émettre en continu sur un même réseau élémentaire, en particulier sur un même lien virtuel, les trames 32 ne peuvent toutefois pas être exactement émises systématiquement avec un écart temporel être deux trames 32 successives égal à cet écart temporel minimal BAG, et un décalage peut alors être observé entre un instant théorique d'émission et un instant observé (ou mesuré) d'émission, ce décalage étant alors appelé gigue d'émission. La gigue d'émission est typiquement inférieure à 500 µs.

L'écart temporel minimal BAG est par exemple sensiblement égal à 16ms ou encore à 32ms.

La table d'émission TAB permet alors de maitriser la gigue d'émission, en définissant les instants d'émission de trames 32 successives sur un même réseau élémentaire, en particulier sur un même lien virtuel, et en garantissant alors par construction la durée séparant deux émissions successives de trame 32 sur ledit réseau élémentaire.

L'homme du métier observera alors que la table d'émission TAB fournit également une signature temporelle d'émission pour le réseau de communication 16, qui est alors exploitée par le module de vérification 44, afin de détecter une éventuelle anomalie sur le réseau de communication 16.

En complément facultatif, le module de vérification 44 est configuré en outre pour comparer la gigue G estimée pour le réseau élémentaire respectif à la ou aux gigues G estimées pour le ou les autres réseaux élémentaires d'un groupe de réseaux élémentaires, ce groupe de réseaux élémentaires correspondant à un chemin de transmission de données avec au moins un commutateur réseau 28 en commun.

En complément facultatif, le module de vérification 44 est configuré pour mettre en œuvre un algorithme de gestion de la redondance trame par trame sur chacun des réseaux élémentaires, tel que celui décrit dans le document FR 2 864 393 B1.

Selon ce complément facultatif, le module de vérification 44 est de préférence configuré pour mettre en œuvre ledit algorithme de gestion de la redondance, avant d'estimer la gigue de réseau G à partir de l'écart temporel minimal BAG et des instants temporels de réception d'au moins deux trames 32 reçues sur ledit réseau élémentaire, puis de comparer la gigue estimée G à la plage autorisée de valeurs de gigue de réseau. Autrement dit, selon ce complément facultatif, la gigue de réseau G est de préférence estimée après la mise en œuvre de l'algorithme de gestion de la redondance.

Selon ce complément facultatif, dans l'exemple de réalisation décrit précédemment, où les réseaux élémentaires sont en forme de liens virtuels, le module de vérification 44 est alors apte à comparer la gigue G estimée pour le lien virtuel respectif à la ou aux gigues G estimées pour le ou les autres liens virtuels d'un groupe de liens virtuels, ce groupe de liens virtuels correspondant à un chemin de transmission de données avec au moins un commutateur réseau 28 en commun.

La plage autorisée de valeurs de gigue de réseau est par exemple déterminée via un apprentissage préliminaire comportant l'envoi de séquences prédéfinies de trames. Cet apprentissage préliminaire comporte de préférence l'envoi de séquences normales correspondant à des valeurs autorisées de gigue de réseau et de séquences anormales correspondant à des valeurs non-conformes de gigue de réseau. Par valeurs non-conformes de gigue de réseau, on entend des valeurs en dehors de la plage autorisée de valeurs de gigue de réseau, c'est-à-dire n'appartenant pas à ladite plage autorisée.

Autrement dit, la plage autorisée de valeurs de gigue de réseau est alors déterminée via une méthode d'apprentissage automatique (de l'anglais *machine learning*).

Parmi ces méthodes d'apprentissage automatique, celles basées sur une approche statistique, par exemple la méthode de Naive Bayes, semblent plus particulièrement adaptées pour caractériser la gigue de réseau depuis le dispositif de réception 20. Dans ce cas, une première phase d'apprentissage supervisé avec labellisation sera mise en place avec des données spécifiquement définies et labellisées pour l'apprentissage. Dans un premier temps, cet apprentissage supervisé permettra d'élaborer le modèle de gigue de réseau, puis celui-ci sera embarqué dans le dispositif de réception 20 pour être utilisé de manière opérationnelle afin de détecter les comportements anormaux.

Parmi ces méthodes d'apprentissage automatique encore, l'impact de données de liens virtuels différents, mais circulant sur des routes physiques communes, est caractérisable par des méthodes d'apprentissage non supervisé, telle qu'une méthode d'agrégation par k-moyenne (de l'anglais *cluster k-means*) qui effectue une classification des données échangées en fonction de la valeur d'une distance, la distance étant ici choisie pour être caractéristique d'une route réelle, d'est-à-dire de l'impact sur la gigue de réseau de la route réelle commune aux trames de données 32.

En variante ou en complément, la plage autorisée de valeurs de gigue de réseau est déterminée via une analyse statique du réseau de communication 16 et de la table d'émission TAB prédéfinie.

En complément facultatif, la plage autorisée de valeurs de gigue de réseau dépend d'une phase de fonctionnement dans laquelle se trouve l'aéronef 10 à bord duquel le dispositif électronique de réception 20 est destiné à être embarqué. En effet, la bande passante du réseau de communication 16 dépend de la phase de fonctionnement de l'aéronef 10, et la gigue de réseau G variera alors également en fonction de la phase de fonctionnement de l'aéronef 10. A titre d'exemple, une première plage autorisée de valeurs de gigue de réseau est associée à la phase au sol de l'aéronef 10, et une deuxième plage autorisée de valeurs de gigue de réseau est associée aux phases de vol de l'aéronef 10. Ladite deuxième plage comporte de préférence des valeurs supérieures à celles de ladite première plage. Ceci permet alors de tenir compte de différence de trafic entre les phases de vol et au sol. Au sol, la gigue de réseau G est plus faible, car tous les équipements de l'aéronef 10 ne sont pas opérationnels.

En complément, la période temporelle inter-trames $\Delta T_T$ prédéfinie est de préférence supérieure au double de la valeur maximale $G_{max}$ de la plage autorisée de valeurs de gigue de réseau.

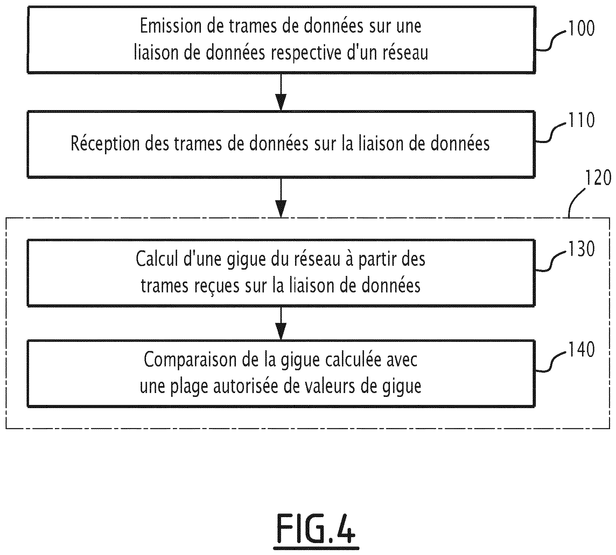

Le fonctionnement du système de communication 12 selon l'invention va désormais être expliqué à l'aide de la figure 4 représentant un organigramme d'un procédé de transmission de données au sein du système de communication 12 depuis un dispositif d'émission 18 à destination de dispositif(s) de réception 20 via le réseau de communication asynchrone 16.

Lors d'une étape initiale 100, le dispositif d'émission 18 émet, via son module d'émission 40 et à destination de dispositif(s) de réception 20, plusieurs trames 32 de données sur un réseau élémentaire respectif du réseau de communication asynchrone 16. Le réseau élémentaire respectif forme une liaison de données pour la transmission desdites trames 32, et correspond par exemple à un lien virtuel lorsque le réseau de communication 16 est conforme à la partie 7 de la norme ARINC 664.

Lors de l'étape 110, chaque dispositif de réception 20 destinataire reçoit, sur ledit réseau élémentaire, c'est-à-dire sur ladite liaison de données, du réseau de communication asynchrone 16 et via son module de réception 42, les trames 32 de données émises.

Chaque dispositif de réception 20 destinataire ayant reçu plusieurs trames 32 vérifie alors, lors de l'étape suivante 120 et via son module de vérification 44, que la valeur de la gigue de réseau estimée à partir de ces trames 32 reçues est cohérente, et génère un signal d'alarme dans le cas contraire.

L'étape de vérification 120 comporte alors une sous-étape 130 lors de laquelle le module de vérification 44 estime la gigue de réseau G à partir de l'écart temporel minimal BAG et des instants temporels de réception des trames 32 reçues sur ledit réseau élémentaire.

L'étape de vérification 120 comporte ensuite une sous-étape 140 lors de laquelle le module de vérification 44 compare la gigue de réseau G estimée à la plage autorisée de valeurs de gigue de réseau. Une alerte est générée par le module de vérification 44 en cas d'incohérence détectée lors de cette comparaison, c'est-à-dire si la valeur estimée de la gigue de réseau G est en dehors de la plage autorisée de valeurs de gigue de réseau.

La figure 3 illustre alors une vérification que la gigue de réseau G ne dépasse pas la valeur maximale $G_{max}$ de la plage autorisée de valeurs de gigue de réseau, en calculant des plages temporelles successives autorisées de réception d'une trame 32 suivante à partir de l'instant de réception d'une trame 32 précédente, et ce pour différents niveaux d'évaluation.

Lorsque l'évaluation de la gigue de réseau G au regard de la valeur maximale $G_{max}$ de gigue de réseau est faite sur deux trames 32 reçues successivement, c'est-à-dire entre une trame précédente d'identifiant N et une trame suivante d'identifiant N+1, par exemple en se basant sur les instants de réception des trames C1 et C2, ou des trames C2 et C3, ou encore des trames C3 et C4 sur la figure 3, l'évaluation est dite de niveau 1, également noté N1. De manière analogue, lorsque cette évaluation est faite entre une trame précédente d'identifiant N et une trame suivante d'identifiant N+2, par exemple en se basant sur les instants de réception des trames C1 et C3, ou encore des trames C2 et C4 sur la figure 3, l'évaluation est dite de niveau 2, également noté N2. Similairement, lorsque cette évaluation est faite entre une trame précédente d'identifiant N et une trame suivante d'identifiant N+3, par exemple en se basant sur les instants de réception des trames C1 et C4 sur la figure 3, l'évaluation est dite de niveau 3, également noté N3, et ainsi de suite.

Pour chaque niveau d'évaluation Ni, les plages temporelles successives autorisées de réception de la trame 32 suivante sont alors définies par des durées minimales $T_jm(Ni)$ et des durées maximales $T_jM(Ni)$ à partir de l'instant de réception de la trame 32 précédente, où i est un indice entier supérieur ou égal à 1, associé au niveau d'évaluation ; et j est un indice entier supérieur ou égal à 1 et s'incrémentant de 1 à chaque nouvelle plage temporelle successive autorisée. Autrement dit et à titre d'exemple, pour le niveau 1 d'évaluation, noté N1, la première plage temporelle autorisée est comprise entre les durées minimale $T_1m(N1)$ et maximale $T_1M(N1)$, la deuxième plage temporelle autorisée est comprise entre les durées minimale $T_2m(N1)$ et maximale $T_2M(N1)$, et ainsi de suite, à compter de l'instant de réception de la trame 32 précédente. De manière analogue, pour le niveau 2 d'évaluation, noté N2, la première plage temporelle autorisée est comprise entre les durées minimale $T_1m(N2)$ et maximale $T_1M(N2)$, la deuxième plage temporelle autorisée est comprise entre les durées minimale $T_2m(N2)$ et maximale $T_2M(N2)$, et ainsi de suite, à compter de l'instant de réception de la trame 32 précédemment reçue.

Les durées minimale $T_jm(Ni)$ et maximale $T_jM(Ni)$ vérifient par exemple les équations suivantes respectives :

[Math3]

$$T_jm(N_i) = i \cdot \mathrm{BAG} + (j-1) \cdot \Delta T_T - G_{max}$$

[Math4]

$$T_jM(N_i) = i \cdot \mathrm{BAG} + (j-1) \cdot \Delta T_T + G_{max}$$

où i représente l'indice entier du niveau d'évaluation, i ≥ 1 ;
j représente l'indice entier de la plage temporelle autorisée de réception, j ≥ 1 ;
BAG représente l'écart temporel minimal entre les instants temporels d'émission de deux trames 32 successives ;
$\Delta T_T$ représente la période temporelle inter-trames prédéfinie, définie précédemment et vérifiant par exemple l'équation (Math2) ; et
$G_{max}$ représente la valeur maximale de la plage autorisée de valeurs de gigue de réseau.

Suivant cette vérification de la gigue de réseau G par rapport à la valeur maximale $G_{max}$ de la plage autorisée de valeurs de gigue de réseau, laquelle le module de vérification 44 déclenche alors une alarme, notée ALM, lorsque l'instant de réception d'une trame 32 suivante est en dehors d'une plage temporelle autorisée de réception respective à partir de l'instant de réception d'une trame 32 précédente.

Dans l'exemple de la figure 3, une alarme ALM est alors déclenchée dans le cas de la trame C4 reçue après la durée maximale $T_2M(N2)$, et avant la prochaine durée minimale $T_3m(N2)$, à compter de l'instant de réception de la trame C2 pour cette évaluation de niveau N2. Une alarme ALM est également déclenchée dans le cas de la trame C4 reçue après la durée maximale $T_2M(N3)$, et avant la prochaine durée minimale $T_3m(N3)$, à compter de l'instant de réception de la trame C1 pour cette évaluation de niveau N3.

Ainsi, le dispositif électronique de réception 20 selon l'invention permet d'estimer la gigue de réseau G à partir de l'écart temporel minimal BAG et des instants temporels de réception des trames, puis de comparer la gigue de réseau G estimée à la plage autorisée de valeurs de gigue de réseau, ceci afin de détecter une valeur anormale de la gigue de réseau G.

Cette surveillance de la gigue de réseau G permet alors détecter de manière simple et directement au niveau du dispositif électronique de réception 20 une éventuelle attaque sur le réseau de communication 16, sans devoir recourir à des informations envoyées par des équipements tiers, qui seraient d'ailleurs potentiellement compromis.

La détection d'une valeur anormale de gigue permet de déceler plus facilement un remplacement d'un équipement connecté au réseau par un équipement malveillant. En effet, dans le cas d'un tel remplacement, la gigue de réseau est difficilement maitrisable par l'équipement malveillant, et une valeur anormale suite à ce remplacement sera alors détectée par le dispositif de réception 20.

De la même manière, dans le cas du remplacement d'un commutateur réseau par un commutateur malveillant, la gigue de réseau sera aussi difficilement maitrisable par le commutateur malveillant, et une valeur anormale suite à ce remplacement sera alors détectée par le dispositif de réception 20. Il est d'ailleurs à noter qu'une valeur nulle de la gigue de réseau pouvant être aussi synonyme d'une absence totale de trafic, autre que celui du réseau élémentaire surveillé, sur le réseau de communication sera aussi typiquement détectée par le dispositif de réception 20, en étant alors inférieure à la valeur minimale de la plage autorisée de valeurs de gigue de réseau. Une telle détection est également souhaitée car une absence totale de trafic est suspicieuse.

De manière analogue encore, une cyberattaque utilisant de manière accrue le réseau de communication 16 aura un impact sur la gigue de réseau surveillée, et sera alors détectable par le dispositif électronique de réception 20 selon l'invention.

Le dispositif de réception 20 permet alors de détecter différents types d'attaques malveillantes, telles que celles précitées, en particulier des cyberattaques, et permet de manière générale d'améliorer la surveillance du réseau de communication 16.

## Revendications

1. Dispositif électronique (20) de réception de données via un réseau de communication asynchrone (16) comportant au moins un réseau élémentaire, le dispositif électronique (20) étant configuré pour être connecté audit réseau élémentaire et comprenant :

    - un module de réception (42) configuré pour recevoir via le réseau de communication asynchrone (16) plusieurs trames (32) successives de données, chaque trame (32) étant transmise sur ledit réseau élémentaire selon une table d'émission prédéfinie (TAB) et avec un écart temporel minimal (BAG) entre les instants temporels d'émission de deux trames (32) successives,

    **caractérisé en ce qu'**il comprend un module de vérification (44) configuré, pour au moins deux trames (32) de données reçues, pour estimer une gigue de réseau (G) à partir de l'écart temporel minimal (BAG) et des instants temporels de réception d'au moins deux trames (32) reçues sur ledit réseau élémentaire, puis pour comparer la gigue estimée (G) à une plage autorisée de valeurs de gigue de réseau,
    le module de vérification (44) étant configuré pour estimer la gigue de réseau (G) à partir de la durée ($\Delta T_R$) séparant deux instants temporels de réception et d'une période temporelle inter-trames ($\Delta T_T$) prédéfinie, la période temporelle inter-trames ($\Delta T_T$) prédéfinie étant fonction de l'écart temporel minimal (BAG).

2. Dispositif (20) selon l'une quelconque des revendications précédentes, dans lequel la plage autorisée de valeurs de gigue de réseau est déterminée via un apprentissage préliminaire comportant l'envoi de séquence(s) prédéfinie(s) de trame(s),
    de préférence l'envoi de séquences normales correspondant à des valeurs autorisées de gigue de réseau et de séquences anormales correspondant à des valeurs non-conformes de gigue de réseau.

3. Dispositif (20) selon l'une quelconque des revendications précédentes, dans lequel la plage autorisée de valeurs de gigue de réseau est déterminée via une analyse statique du réseau.

4. Dispositif (20) selon l'une quelconque des revendications précédentes, dans lequel la plage autorisée de valeurs de gigue de réseau dépend d'une phase de fonctionnement dans laquelle se trouve un aéronef (10) à bord duquel le dispositif électronique de réception (20) est destiné à être embarqué.

5. Dispositif (20) selon l'une quelconque des revendications précédentes, dans lequel le module de vérification (44) est configuré en outre pour comparer la gigue (G) estimée pour le réseau élémentaire respectif à la ou aux gigues

(G) estimées pour le ou les autres réseaux élémentaires d'un groupe de réseaux élémentaires, ce groupe de réseaux élémentaires correspondant à un chemin de transmission de données avec au moins un commutateur réseau (28) en commun.

6. Dispositif (20) selon l'une quelconque des revendications précédentes, dans lequel la période temporelle inter-trames ($\Delta T_T$) prédéfinie est égale à l'écart temporel minimal (BAG) divisé par un facteur de sur-échantillonnage (K) ; la période temporelle inter-trames ($\Delta T_T$) prédéfinie étant de préférence supérieure au double de la valeur maximale ($G_{max}$) de la plage autorisée de valeurs de gigue de réseau.

7. Dispositif (20) selon l'une quelconque des revendications précédentes, dans lequel le dispositif (20) est un dispositif avionique conforme à la partie 7 de la norme ARINC 664, et le module de réception (42) est configuré pour recevoir chaque trame selon un protocole conforme à la partie 7 de la norme ARINC 664.

8. Système électronique (12) de communication de données comprenant un dispositif électronique d'émission (18) et un dispositif électronique de réception (20) reliés entre eux par un réseau de communication asynchrone (16), le réseau de communication asynchrone (16) comportant au moins un réseau élémentaire, le dispositif électronique d'émission (18) étant configuré pour émettre, à destination du dispositif électronique de réception (20), plusieurs trames (32) successives de données sur ledit réseau élémentaire, **caractérisé en ce que** le dispositif électronique de réception (20) est selon l'une quelconque des revendications précédentes.

9. Procédé de réception de données via un réseau de communication asynchrone (16) comportant au moins un réseau élémentaire, le procédé étant mis en œuvre par un dispositif électronique de réception (20) connecté audit réseau élémentaire et comprenant l'étape suivante :

- la réception (110), via le réseau de communication asynchrone (16), plusieurs trames (32) successives de données, chaque trame (32) étant transmise sur ledit réseau élémentaire et selon une table d'émission prédéfinie (TAB) et avec un écart temporel minimal (BAG) entre les instants temporels d'émission de deux trames (32) successives,

**caractérisé en ce qu'**il comprend en outre une étape (120) de vérification pour au moins deux trames (32) de données reçues, l'étape de vérification (120) comportant l'estimation (130) d'une gigue de réseau (G) à partir de l'écart temporel minimal (BAG) et des instants temporels de réception d'au moins deux trames (32) reçues sur ledit réseau élémentaire, puis la comparaison (140) de la gigue estimée (G) à une plage autorisée de valeurs de gigue de réseau, la gigue de réseau (G) étant estimée à partir de la durée ($\Delta T_R$) séparant deux instants temporels de réception et d'une période temporelle inter-trames ($\Delta T_T$) prédéfinie, la période temporelle inter-trames ($\Delta T_T$) prédéfinie étant fonction de l'écart temporel minimal (BAG).

10. Programme d'ordinateur comportant des instructions logicielles qui, lorsqu'elles sont exécutées par un ordinateur, mettent en œuvre toutes les étapes d'un procédé selon la revendication précédente.

**Patentansprüche**

1. Elektronische Vorrichtung (20) zum Empfangen von Daten über ein asynchrones Kommunikationsnetz (16), welches mindestens ein Elementarnetz aufweist, wobei die elektronische Vorrichtung (20) dazu eingerichtet ist, mit dem Elementarnetz verbunden zu sein, und aufweist:

- ein Empfangsmodul (42), welches dazu eingerichtet ist, über das asynchrone Kommunikationsnetz (16) mehrere aufeinanderfolgende Rahmen (32) an Daten zu empfangen, wobei jeder Rahmen (32) auf dem Elementarnetz gemäß einer vordefinierten Sendetabelle (TAB) und mit einem minimalen zeitlichen Abstand (BAG) zwischen den Zeitpunkten der Aussendung von zwei aufeinanderfolgenden Rahmen (32) übertragen wird,

**gekennzeichnet dadurch, dass** sie ein Verifizierungsmodul (44) aufweist, welches dazu eingerichtet ist, um, für mindestens zwei empfangene Rahmen (32) an Daten, einen Netz-Jitter (G) auf Grundlage des minimalen zeitlichen Abstands (BAG) und der Zeitpunkte des Empfangs von mindestens zwei über das Elementarnetz empfangenen Rahmen (32) zu ermitteln und dann den ermittelten Jitter (G) mit einem zulässigen Bereich von Netz-Jitter-Werten zu vergleichen,
wobei das Verifizierungsmodul (44) dazu eingerichtet ist, den Netz-Jitter (G) auf Grundlage der Dauer ($\Delta T_R$), welche zwei Empfangszeitpunkte trennt, und einer vordefinierten Zeitperiode zwischen Rahmen ($\Delta T_T$) zu ermitteln, wobei die vordefinierte Zeitperiode zwischen Rahmen ($\Delta T_T$) von dem minimalen zeitlichen Abstand (BAG) abhängt.

2. Vorrichtung (20) gemäß irgendeinem der vorhergehenden Ansprüche, wobei der zulässige Bereich von Netz-Jitter-Werten mittels Vorauslernens, welches das Versenden einer (von) vordefinierten Rahmen-Sequenz(en) aufweist, bestimmt wird,
wobei vorzugsweise das Versenden von normalen Sequenzen zulässigen Netz-Jitter-Werten entspricht und von abnormen Sequenzen nicht zulässigen Netz-Jitter-Werten entspricht.

3. Vorrichtung (20) gemäß irgendeinem der vorhergehenden Ansprüche, wobei der zulässige Bereich von Netz-Jitter-Werten mittels einer statischen Analyse des Netzes bestimmt wird.

4. Vorrichtung (20) gemäß irgendeinem der vorhergehenden Ansprüche, wobei der zulässige Bereich von Netz-Jitter-Werten von einer Betriebsphase abhängt, in welcher sich ein Luftfahrzeug (10) befindet, an Bord dessen die elektronische Vorrichtung zum Empfangen (20) zur Mitnahme bestimmt ist.

5. Vorrichtung (20) gemäß irgendeinem der vorhergehenden Ansprüche, wobei das Verifizierungsmodul (44) ferner dazu eingerichtet ist, den ermittelten Jitter (G) für das jeweilige Elementarnetz mit dem oder den ermittelten Jittern (G) für das oder die anderen Elementarnetze aus einer Gruppe von Elementarnetzen zu vergleichen, wobei die Gruppe von Elementarnetzen einem Datenübertragungsweg mit mindestens einem gemeinsamen Verteilnetz (28) entspricht.

6. Vorrichtung (20) gemäß irgendeinem der vorhergehenden Ansprüche, wobei die vordefinierte Zeitperiode zwischen Rahmen ($\Delta T_T$) gleich einem minimalen zeitlichen Abstand (BAG) geteilt durch einen Überabtastungsfaktor (K) ist, wobei die vordefinierte Zeitperiode zwischen Rahmen ($\Delta T_T$) vorzugsweise größer als das Doppelte des Maximalwerts ($G_{max}$) des zulässigen Bereichs von Netz-Jitter-Werten ist.

7. Vorrichtung (20) gemäß irgendeinem der vorhergehenden Ansprüche, wobei die Vorrichtung (20) eine Avionik-Vorrichtung, welche mit dem Teil 7 der Norm ARINC 664 konform ist, ist und das Empfangsmodul (42) dazu eingerichtet ist, jeden Rahmen gemäß einem Protokoll, welches mit dem Teil 7 der Norm ARINC 664 konform ist, zu empfangen.

8. Elektronisches System (12) zur Datenkommunikation, welches eine elektronische Vorrichtung zum Senden (18) und eine elektronische Vorrichtung zum Empfangen (20), welche miteinander durch ein asynchrones Kommunikationsnetz (16) verbunden sind, aufweist, wobei das asynchrone Kommunikationsnetz (16) mindestens ein Elementarnetz aufweist,
wobei die elektronische Vorrichtung zum Senden (18) dazu eingerichtet ist, mehrere aufeinanderfolgende Rahmen (32) an Daten auf dem Elementarnetz an die elektronische Vorrichtung zum Empfangen (20) zu senden,
**gekennzeichnet dadurch, dass** die elektronische Vorrichtung zum Empfangen (20) gemäß irgendeinem der vorhergehenden Ansprüche ist.

9. Verfahren zum Empfangen von Daten über ein asynchrones Kommunikationsnetz (16), welches mindestens ein Elementarnetz aufweist, wobei das Verfahren durch eine elektronische Vorrichtung zum Empfangen (20), welche mit dem Elementarnetz verbunden ist, durchgeführt wird und die folgenden Schritte aufweist:

- das Empfangen (110), über das asynchrone Kommunikationsnetz (16), von mehreren aufeinanderfolgenden Rahmen (32) an Daten, wobei jeder Rahmen (32) auf dem Elementarnetz und gemäß einer vordefinierten Sendetabelle (TAB) und mit einem minimalen zeitlichen Abstand (BAG) zwischen den Zeitpunkten der Aussendung von zwei aufeinanderfolgenden Rahmen (32) übertragen wird,

**gekennzeichnet dadurch, dass** es ferner einen Schritt (120) des Verifizierens für mindestens zwei empfangene Rahmen (32) an Daten aufweist,
wobei der Schritt des Verifizierens (120) aufweist das Ermitteln (130) eines Netz-Jitters (G) auf Grundlage des minimalen zeitlichen Abstands (BAG) und der Zeitpunkte des Empfangs von mindestens zwei über das Elementarnetz empfangenen Rahmen (32) und dann das Vergleichen des ermittelten Jitters (G) mit einem zulässigen Bereich von Netz-Jitter-Werten,

wobei der Netz-Jitter (G) auf Grundlage der Dauer ($\Delta T_R$), welche zwei Empfangszeitpunkte trennt, und einer vordefinierten Zeitperiode zwischen Rahmen ($\Delta T_T$) ermittelt wird, wobei die vordefinierte Zeitperiode zwischen Rahmen ($\Delta T_T$) von dem minimalen zeitlichen Abstand (BAG) abhängt.

10. Computerprogramm, welches Softwareanweisungen, welche, bei deren Ausführung durch einen Computer, jeden der Schritt eines Verfahrens gemäß dem vorhergehenden Anspruch durchführen, aufweist.

**Claims**

1. An electronic receiving device (20) for receiving data via an asynchronous communication network (16) including at least one elementary network, the electronic device (20) being configured to be connected to said elementary network and comprising:

   - a receiving module (42) configured to receive several successive data frames (32) via the asynchronous communication network (16), each frame (32) being sent over said elementary network according to a predefined sending table (TAB) and with a minimum time gap (BAG) between sending time instants of two successive frames (32),

   **characterized in that** it comprises a verification module (44) configured, for at least two received data frames (32), to estimate a network jitter (G) from the minimum time gap (BAG) and reception time instants of at least two frames (32) received on said elementary network, then to compare the estimated jitter (G) to an authorized range of network jitter values,
   the verification module (44) being configured to estimate the network jitter (G) from the duration ($\Delta T_R$) separating two reception time instants and from a predefined inter-frame time period ($\Delta T_T$), the predefined inter-frame time period ($\Delta T_T$) being a function of the minimum time gap (BAG).

2. The device (20) according to any one of the preceding claims, wherein the authorized range of network jitter values is determined through preliminary learning including a sending of predefined sequence(s) of frame(s),
   preferably the sending of normal sequences corresponding to authorized network jitter values and abnormal sequences corresponding to non-compliant network jitter values.

3. The device (20) according to any one of the preceding claims, wherein the authorized range of network jitter values is determined through a static analysis of the network.

4. The device (20) according to any one of the preceding claims, wherein the authorized range of network jitter values depends on an operating phase in which an aircraft (10) is found, aircraft on which the electronic receiving device (20) is intended to be embedded.

5. The device (20) according to any one of the preceding claims, wherein the verification module (44) is further configured to compare the estimated jitter (G) for the respective elementary network to the estimated jitter(s) (G) for the other elementary network(s) of a group of elementary network(s), this group of elementary network(s) corresponding to a data transmission path with at least one network switch (28) in common.

6. The device (20) according to any one of the preceding claims, wherein the predefined inter-frame time period ($\Delta T_T$) is equal to the minimum time gap (BAG) divided by an oversampling factor (K);
   the predefined inter-frame time period ($\Delta T_T$) being preferably greater than twice the maximum value ($G_{max}$) of the authorized range of network jitter values.

7. The device (20) according to any one of the preceding claims, wherein the device (20) is an avionics device according to part 7 of standard ARINC 664, and the receiving module (42) is configured to receive each frame according to a protocol compliant with part 7 of standard ARINC 664.

8. An electronic data communication system (12) including an electronic sending device (18) and an electronic receiving device (20) connected to one another by an asynchronous communication network (16), the asynchronous communication network (16) including at least one elementary network,
   the electronic sending device (18) being configured to send, to the electronic receiving device (20), several successive data frames (32) on said elementary network,

**characterized in that** the electronic receiving device (20) is according to any one of the preceding claims.

9. A method for receiving data via an asynchronous communication network (16) including at least one elementary network, the method being carried out by an electronic receiving device (20) connected to said elementary network, and comprising the following step:

   - receiving (110) several successive data frames (32) via the asynchronous communication network (16), each frame (32) being sent over the elementary network and according to a predefined sending table (TAB) and with a minimum time gap (BAG) between sending time instants of two successive frames (32),

   **characterized in that** it further includes a verification step (120) for verifying at least two received data frames (32), the verification step (120) including estimating (130) a network jitter (G) from the minimum time gap (BAG) and reception time instants of at least two frames (32) received on said elementary network, then a comparison (140) of the estimated jitter (G) to an authorized range of network jitter values, the network jitter (G) being estimated from the duration ($\Delta T_R$) separating two reception time instants and from a predefined inter-frame time period ($\Delta T_T$), the predefined inter-frame time period ($\Delta T_T$) being a function of the minimum time gap (BAG).

10. A computer program comprising software instructions which, when executed by a computer, carry out all the steps of a method according to the preceding claim.

FIG.1

TAB

| | | C2 |
|----|----|----|
| A1 | B1 | C1 |

32

A1　　B1　　C1　　　　　　　　　　　　　　　　C2

BAG

# FIG.2

FIG.3

Emission de trames de données sur une
liaison de données respective d'un réseau — 100

Réception des trames de données sur la liaison de données — 110

120

Calcul d'une gigue du réseau à partir des
trames reçues sur la liaison de données — 130

Comparaison de la gigue calculée avec
une plage autorisée de valeurs de gigue — 140

## FIG.4

## RÉFÉRENCES CITÉES DANS LA DESCRIPTION

**Documents brevets cités dans la description**

- US 20150103734 A1
- US 20170171112 A1
- FR 2920623 A1
- US 20180337938 A1
- FR 2864393 B1
- US 20030152077 A1